# EUROPÄISCHE PATENTSCHRIFT

(11) **EP 1 593 207 B1**
(45) Veröffentlichungstag und Bekanntmachung des Hinweises auf die Patenterteilung: **28.10.2015**
(21) Anmeldenummer: 03782155.0
(22) Anmeldetag: 09.12.2003
(51) Int. Cl.: H04B 7/005

(54) **VERFAHREN ZUM EINSTELLEN DER SENDELEISTUNGEN ZWEIER KANÄLE EINER VERBINDUNG, STATION UND KOMMUNIKATIONSSYSTEM**
METHOD FOR ADJUSTING THE TRANSMISSION OUTPUTS OF TWO CHANNELS OF A LINK, STATION AND COMMUNICATION SYSTEM
PROCÉDÉ DE RÉGLAGE DES PUISSANCES D'ÉMISSION DE DEUX CANAUX D'UNE LIAISON, STATION ET SYSTÈME DE COMMUNICATION

(30) Priorität: 13.02.2003 DE 10306171
(43) Veröffentlichungstag der Anmeldung: 09.11.2005
(73) Patentinhaber: Siemens Aktiengesellschaft, 80333 München (DE)
(72) Erfinder: KRÖNER, Hans, 73312 Geislingen-Weiler (DE); OESTREICH, Stefan, 83607 Holzkirchen (DE)
(86) Internationale Anmeldenummer: PCT/DE2003/004053
(87) Internationale Veröffentlichungsnummer: WO 2004/073202

(56) Entgegenhaltungen:
- EP-A- 1 011 211
- EP-A- 1 257 092
- EP-A- 1 274 178
- US-B1- 6 271 945
- US-B1- 6 360 088

## Beschreibung

Die Erfindung betrifft ein Verfahren zum Einstellen der Sendeleistungen zweier Kanäle einer Verbindung, eine entsprechende Station für ein Kommunikationssystem sowie ein Kommunikationssystem mit einer derartigen Station.

Zwischen einem Sender und einem Empfänger können Daten einer Verbindung auf unterschiedlichste Arten übertragen werden. Die Datenübertragung kann beispielsweise leitungsgebunden erfolgen oder aber auch über Funk. Bei der Funkübertragung erfolgt die Datenübertragung über eine Luftschnittstelle mittels hochfrequenter Trägerschwingungen. Beispiele für Funkübertragungssysteme sind die inzwischen weitverbreiteten Mobilfunksysteme, wie beispielsweise das u.a. in Europa vorherrschende GSM-(Global System of Mobile Communication) oder das besonders in den USA verbreitete IS-95-System.

Zur Erhöhung der Datenrate einer Verbindung kann es wünschenswert sein, der Verbindung mehr als nur einen Kanal für die Datenübertragung zuzuordnen. Je nach verwendetem Multiplexverfahren kann es sich bei den Kanälen entweder um einen Zeitschlitz eines Zeitrahmens, einen Spreizcode oder eine bestimmte Frequenz handeln oder auch um eine Kombination dieser. Nach dem vor allem für Europa vorgesehenen zukünftigen UMTS-FDD (Universal Mobile Telecommunication Standard-Frequency Division Duplex)-Standard für die Mobilfunksysteme der dritten Generation ist beispielsweise die Zuordnung mehrerer Kanäle zu einer Verbindung vorgesehen. In diesem Zusammenhang stellt sich die Frage, auf welche Weise die Sendeleistung für beispielsweise zwei Kanäle derselben Verbindung eingestellt werden sollte.

Der Erfindung liegt die Aufgabe zugrunde, ein Verfahren zum Einstellen der Sendeleistungen zweier Kanäle einer ersten Verbindung in einem Kommunikationssystem anzugeben.

Diese Aufgabe wird mit einem Verfahren gemäß Patentanspruch 1 gelöst. Ferner wird diese Aufgabe durch eine Station für ein Kommunikationssystem und ein Kommunikationssystem mit einer solchen Station gemäß den nebengeordneten Patentansprüchen gelöst. Vorteilhafte Aus- und Weiterbildungen der Erfindung sind Gegenstand der abhängigen Ansprüche.

Das erfindungsgemäße Verfahren sieht vor, dass gleichzeitig Daten einer ersten Verbindung über wenigstens zwei Kanäle übertragen werden. Die Sendeleistungen der beiden Kanäle werden auf einen gemeinsamen Wert eingestellt, der abhängig vom Wert eines Qualitätsparameters der Datenübertragung des ersten Kanals und vom Wert eines Qualitätsparameters der Datenübertragung des zweiten Kanals ist.

Die Erfindung ermöglicht, für beide Kanäle einen gemeinsamen Mechanismus zur Einstellung der Sendeleistung zu wählen, da eine gemeinsame Sendeleistung für beide Kanäle eingestellt wird. Dennoch werden individuelle Eigenschaften beider Kanäle berücksichtigt, indem die Werte der Qualitätsparameter beider Kanäle bei der Festlegung der gemeinsamen Sendeleistung herangezogen werden.

Die Erfindung ist insbesondere vorteilhaft, wenn für beide Kanäle unterschiedliche Übertragungsbedingungen gelten, ihre Werte der Qualitätsparameter der Datenübertragung also unterschiedlich sind. Würde man in einem solchen Fall die gemeinsame Sendeleistung lediglich von einem Qualitätsparameter der Datenübertragung eines der beiden Kanäle abhängig machen, wäre diese gemeinsame Sendeleistung zwar passend für diesen Kanal aber entweder zu hoch oder zu niedrig für den anderen Kanal. Durch die Erfindung wird erreicht, dass eine gemeinsame Sendeleistung eingestellt wird, die zwischen den Bedürfnissen der beiden Kanäle liegt, so dass sie zu hoch für den Kanal mit den besseren Übertragungsbedingungen und zu niedrig für den Kanal mit den schlechteren Übertragungsbedingungen ist. Hierdurch ist die Sendeleistung zwar u.U. höher als im zuvor genannten Fall der Berücksichtigung des Qualitätsparameters lediglich eines Kanals. Dafür ist bei der Erfindung die Unterschreitung der für den anderen Kanal im Optimalfall benötigten Sendeleistung jedoch vergleichsweise geringer als im zuvor genannten Fall.

Unterschiedliche Übertragungsbedingungen für die beiden Kanäle können dadurch bedingt sein, dass unterschiedlich starke Interferenzen für beide Kanäle auftreten. Unter "Interferenz" wird der Einfluss störender Signale auf die übertragenden Signale am Ort des Empfängers verstanden.

Für Systeme, die Kanäle nutzen, die durch Verwendung einer Kombination von Verwürfelungscodes und orthogonalen Spreizcodes gebildet werden, besteht folgende Situation: Bei der Intrazelleninterferenz, die durch Übertragungen über andere Kanäle innerhalb derselben Funkzelle verursacht wird, stören sich die Kanäle mit demselben Verwürfelungscode aufgrund der Orthogonalität der verwendeten Spreizcodes theoretisch überhaupt nicht. In der Praxis ist es jedoch so, dass durch die Mehrwegeausbreitung die Orthogonalität beeinträchtigt wird. daher ergibt sich ein sogenannter Orthogonalitätsfaktor zwischen 0,06 und 0,4. Der Orthogonalitätsfaktor gibt an, wie ein fremder Kanal einen betrachteten Kanal interferenzmässig beeinträchtigt. Kanäle, die unterschiedliche Verwürfelungscodes benutzen, haben einen Orthogonalitätsfaktor mit dem Wert 1, dass heißt die von ihnen verursachte Empfangsleistung am Empfänger ist in voller Höhe als Interferenz zu betrachten.

Die Erfindung eignet sich insbesondere zur Anwendung für Verbindungen innerhalb eines Mobilfunksystems der dritten Generation vom Typ UMTS-FDD. Allerdings ist ihre Anwendung auf diesen Fall nicht beschränkt und eignet sich vielmehr auch zur Anwendung in beliebigen anderen Mobilfunksystemen und sogar anderen Funksystemen außerhalb der Mobilfunkkommunikation sowie für Kommunikationssysteme, in denen die Daten der Verbindung nicht über Funk sondern mit anderen Mitteln erfolgt, beispielsweise leitungsgebunden. Voraussetzung für die Anwendung der Erfindung ist lediglich, dass der ersten Verbindung zwei Kanäle zur gleichzeitigen Datenübertragung zugeordnet werden. Statt einer Übertragung über Funk ist auch eine Übertragung mittels anderer drahtloser Übertragungsverfahren möglich.

Die Erfindung ist für beliebige Übertragungsrichtungen einer Verbindung anwendbar. Insbesondere kann sie bei Mobilfunksystemen sowohl für die Downlink- als auch für die Uplink-Richtung angewandt werden.

Nach einer Weiterbildung der Erfindung wird für jeden der beiden Kanäle der Wert des Qualitätsparameters der Datenübertragung bestimmt, aus dem ermittelten Wert des Qualitätsparameters des ersten Kanals und dem ermittelten Wert des Qualitätsparameters des zweiten Kanals ein resultierender Wert berechnet, der resultierende Wert mit einem Sollwert verglichen und die Sendeleistungen der beiden Kanäle werden in Abhängigkeit von dem Soll-/Istvergleich eingestellt.

Hierdurch wird ermöglicht, lediglich einen Regelkreis (im Vergleich zum Vorsehen getrennter Regelkreise für jeden der beiden Kanäle) für das Einstellen der beiden Sendeleistungen vorzusehen. Daher kann das Verfahren mit relativ geringem Aufwand realisiert werden. Insbesondere kann dabei die in einem solchen Regelkreis notwendige Rückübertragung von Messwerten bzw. Steuerkommandos vom Empfänger zum Sender reduziert werden, da bei lediglich einem Regelkreis dies nur für den entsprechenden Kanal erfolgen muss und nicht für beide Kanäle.

Der Qualitätsparameter der Datenübertragung des ersten Kanals und des zweiten Kanals kann vorteilhafter Weise ein Signal-zu-Rausch-Verhältnis des entsprechenden Kanals am Empfänger sein. Es kommt aber z.B. auch eine Bitfehlerrate oder eine Rahmenfehlerrate in Betracht.

Nach einer Weiterbildung der Erfindung werden die Daten der ersten Verbindung vor dem Übertragen in der Weise zwischen den beiden Kanälen verschachtelt (interleaved), dass vor dem Verschachteln aufeinander folgende Daten der ersten Verbindung nach dem Verschachteln unterschiedlichen Kanälen zugeordnet sind. Das bedeutet, dass die Daten auf die beiden Kanäle gemultiplext werden, wobei aber zusätzlich auch die Reihenfolge der Datenübertragung geändert werden kann. Das Verschachteln hat zur Folge, dass das oben angesprochene Wählen einer gemeinsamen Sendeleistung für beide Kanäle, die für den "besseren" Kanal zu hoch und für den "schlechteren" Kanal zu niedrig ist, sich nur unwesentlich auf die Gesamtqualität der Übertragung auswirkt. Aufeinander folgende Daten werden nach dieser Weiterbildung dann nämlich abwechselnd mit relativ hoher und mit relativ niedriger Qualität übertragen, so dass die mittlere Übertragungsqualität über beide Kanäle hinreichend gut ist.

Zur Erhöhung der in einer Funkzelle für die Datenübertragung verfügbaren Kanäle kann es vorgesehen sein, Daten vor ihre Übertragung über den ersten Kanal mit einem ersten Verwürfelungscode zu verwürfeln und Daten vor ihrer Übertragung über den zweiten Kanal mit einem zweiten Verwürfelungscode zu verwürfeln. Ein Verwürfelungscode (Scrambling Code) ist eine vorzugsweise relativ lange Sequenz von Bits, mit der die für die Übertragung vorgesehenen Datenbits bitweise multipliziert (verwürfelt) werden. Vorzugsweise kommen dabei als Verwürfelungscodes Zufallssequenzen (PN, Pseudo Noise-Sequenzen) zum Einsatz. Derartige Verwürfelungscodes werden beispielsweise im Downlink (das ist die Übertragungsrichtung von der Basisstation zur Teilnehmerstation) bei UMTS-FDD eingesetzt.

Zusätzlich zu der ersten Verbindung können gleichzeitig weitere Verbindungen betrieben werden, die jeweils mindestens einen Kanal aufweisen und deren entsprechende Daten vor ihrer Übertragung mit je einem Verwürfelungscode verwürfelt werden, die zu übertragenden Daten der ersten Verbindung und der weiteren Verbindungen vor ihrer Verwürfelung mit Spreizcodes (Spreading Codes) gespreizt werden, wobei Kanäle die den selben Verwürfelungscode verwenden unterschiedliche Spreizcodes verwenden, und mehr Kanäle der weiteren Verbindungen unter Nutzung des ersten Verwürfelungscodes als unter Nutzung des zweiten Verwürfelungscodes betrieben werden. Bei dieser Konstellation sind die Übertragungsbedingungen für den ersten Kanal besser als für den zweiten Kanal.

Durch die Wahl orthogonaler Spreizcode ist es nämlich möglich, bei Verwendung lediglich nur eines Verwürfelungscodes die Orthogonalität der Spreizcodes weitestgehend zu erhalten und hierdurch eine optimale Trennung der Kanäle zu erreichen. Werden jedoch die Spreizcodes gemeinsam mit unterschiedlichen Verwürfelungscodes eingesetzt, kommt es trotz Orthogonalität der Spreizcodes zu stärkeren Störungen zwischen Kanälen, die zwar unterschiedliche Spreizcodes, jedoch auch unterschiedliche Verwürfelungscodes verwenden. Die Kanäle mit dem ersten Verwürfelungscode stören also trotz Verwendung orthogonaler Spreizcodes die Kanäle mit dem anderen Verwürfelungscode weitaus stärker, als sich die Kanäle mit demselben Verwürfelungscode gegenseitig stören. Aus diesem Grunde kommt es zu stärkeren Interferenzen für diejenigen Kanäle, die dem Verwürfelungscode zugeordnet sind, der von der relativ geringeren Anzahl von Kanälen genutzt wird, als für die Kanäle mit demjenigen Verwürfelungscode, der von einer relativ größeren Anzahl von Kanälen genutzt wird.

Diese Weiterbildung der Erfindung ist auf alle CDMA-Übertragungssysteme anwendbar, bei denen eine Spreizung des für die Übertragung verwendeten Frequenzbandes mittels Spreizcodes mit anschließender Verwürfelung erfolgt.

Wenn das Signal-zu-Rausch-Verhältnis als Qualitätsparameter genutzt wird, kann dieses für den zweiten Kanal an einem Empfänger der Daten der Verbindung in weiterer Ausgestaltung dieser Weiterbildung der Erfindung vorteilhaft näherungsweise als Verhältnis aus der Empfangsleistung auf dem ersten Kanal und der Gesamtempfangsleistung berechnet werden. Die Empangsleistung auf dem zweiten Kanal wird nämlich aufgrund der gemeinsamen Sendeleistung weitestgehend mit der Empfangsleistung auf dem ersten Kanal übereinstimmen. Außerdem wird die Gesamtempfangleistung näherungsweise die Interferenz für den zweiten Kanal darstellen, da nur relativ wenige Kanäle mit dem zweiten Verwürfelungscode, mehr Kanäle jedoch mit dem ersten Verwürfelungscode betrieben werden, für die bezüglich des zweiten Kanals ein Orthogonalitätsfaktor von 1 gilt.

Die erfindungsgemäße Station für ein Kommunikationssystem sowie das erfindungsgemäße Kommunikationssystem weisen die für die Durchführung des erfindungsgemäßen Verfahrens notwendigen Mittel bzw. Einrichtungen auf.

Die Erfindung wird im Folgenden anhand von in den Figuren dargestellten Ausführungsbeispielen näher erläutert. Es zeigen:
- Figur 1: mehrere Verbindungen innerhalb eines Mobilfunksystems,
- Figur 2: die sendeseitige Verarbeitung von Daten unterschiedlicher Verbindungen,
- Figur 3: den Aufbau einer Mobilstation aus Figur 1,
- Figur 4: den Aufbau einer Basisstation aus Figur 1,
- Figur 5: das Verschachteln von Daten einer ersten Verbindung aus Figur 1 zwischen zwei Kanälen und
- Figur 6: eine Einheit zur Berechnung eines gemeinsamen Signal-zu-Rausch-Verhältnisses aus Figur 3.

Im Folgenden wird die Erfindung anhand eines Mobilfunksystems der dritten Generation gemäß dem UMTS-FDD-Standard erläutert.

Sie ist aber ebenso auf andere Kommunikationssysteme anwendbar, bei denen einer Verbindung mehr als nur ein Kanal zugeordnet werden kann. Insbesondere ist sie daher anwendbar auf beliebige Mobilfunksysteme sowie auf Systeme mit beliebigen Multiplexverfahren. Daher können die Kanäle im Sinne der Erfindung wahlweise unterschiedliche Zeitschlitze eines Zeitrahmens (TDMA), unterschiedliche Frequenzen (FDMA) oder unterschiedliche Spreizcodes (CDMA) aufweisen oder auch Kombinationen dieser drei Kanaleigenschaften. Im folgenden Ausführungsbeispiel werden die Kanäle durch eine Kombination von einem Spreizcode und einem Verwürfelungscode gebildet.

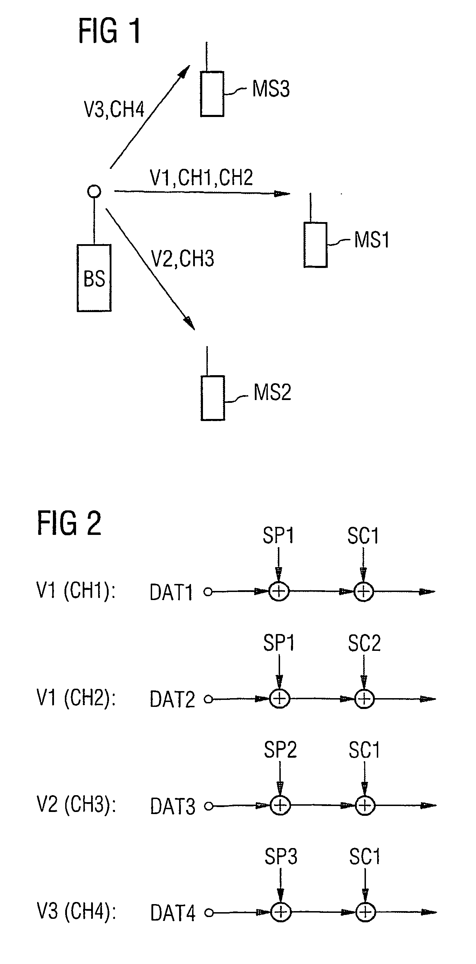

Figur 1 zeigt den Ausschnitt einer einzelnen Funkzelle eines Mobilfunksystems gemäß dem UMTS-FDD-Standard. Dargestellt ist eine die Funkzelle versorgende Basisstation BS sowie drei Mobilstationen MS1, MS2, MS3. Die Mobilität der Stationen ist für die Erfindung nebensächlich. Sie können daher bei anderen Ausführungsformen der Erfindung auch stationäre Teilnehmerstationen sein. Die Basisstation BS unterhält zu jeder der Mobilstationen MS1, MS2, MS3 jeweils eine Verbindung V1, V2, V3. Im Folgenden wird nur die Übertragung von Daten im Downlink (von der Basisstation zu den Teilnehmerstationen) betrachtet, obwohl die Erfindung bei anderen Ausführungsbeispielen auch für die umgekehrte Übertragungsrichtung (Uplink) anwendbar ist. Der ersten Verbindung V1 sind zwei Kanäle CH1, CH2 für die gleichzeitige Übertragung der Daten zugeordnet. Dagegen ist der zweiten Verbindung V2 und der dritten Verbindung V3 nur jeweils ein Kanal CH3, CH4 zugeordnet.

Figur 2 zeigt für die unterschiedlichen Verbindungen V1, V2, V3 aus Figur 1 die sendeseitige Verarbeitung. Die Daten DAT1, die über den ersten Kanal CH1 der ersten Verbindung V1 übertragen werden sollen, werden zunächst mit einem ersten Spreizcode SP1 gespreizt und danach mit einem ersten Verwürfelungscode SC1 verwürfelt. Die Daten DAT2 des zweiten Kanals CH2 der ersten Verbindung V1 werden ebenfalls mit dem ersten Spreizcode SP1 gespreizt, anschließend jedoch mit einem zweiten Verwürfelungscode SC2 verwürfelt. Die Daten DAT3 des Kanals CH3 der zweiten Verbindung V2 werden mit einem zweiten Spreizcode SP2 gespreizt und mit dem ersten Verwürfelungscode SC1 verwürfelt. Die Daten DAT4 des Kanals CH4 der dritten Verbindung V3 werden mit einem dritten Spreizcode SP3 gespreizt und mit dem ersten Verwürfelungscode SC1 verwürfelt. Demnach verwenden Kanäle CH1, CH3, CH4 mit gleichem Verwürfelungscode SC1 unterschiedliche Spreizcode SP1, SP2, SP3. Dagegen können Kanäle CH1, CH2, die unterschiedliche Verwürfelungscodes SC1, SC2 verwenden, denselben Spreizcode SP1 aufweisen.

Im vorliegenden Ausführungsbeispiel verwenden mehr Kanäle, nämlich die Kanäle CH1, CH3 und CH4, den ersten Verwürfelungscode SC1 als den zweiten Verwürfelungscode SC2, der nur vom zweiten Kanal CH2 der ersten Verbindung V1 verwendet wird. Daher stören die Kanäle CH1, CH3 und CH4 den zweiten Kanal CH2 durch Interferenz in der Summe stärker, als der zweite Kanal CH2 die Kanäle CH1, CH3 und CH4 stört. Die verwendeten Spreizcodes SP1, SP2, SP3 sind nämlich bei diesem Ausführungsbeispiel zueinander orthogonal. Diese Orthogonalität wirkt jedoch nur optimal im Sinne der Kanaltrennung, sofern derselbe Verwürfelungscode verwendet wird. Bei Verwendung unterschiedlicher Verwürfelungscodes kommt es dagegen zu stärkeren Störungen zwischen den Kanälen mit dem ersten Verwürfelungscode und den Kanälen mit dem zweiten Verwürfelungscode.

Die Interferenzen bei dem hier betrachteten Ausführungsbeispiel unterscheiden sich für den ersten Kanal CH1 und den zweiten Kanal CH2 der ersten Verbindung V1 besonders stark, je mehr Kanäle CH1, CH3, CH4 den ersten Verwürfelungscode nutzen und je weniger Kanäle CH2 den zweiten Verwürfelungscode SC2 nutzen.

Es kann durch bewusste Wahl der insgesamt in der Funkzelle für Verbindungen benutzte Kanäle beeinflusst erreicht werden, dass möglichst viele der Kanäle den ersten Verwürfelungscode SC1 nutzen und möglichst wenige den zweiten Verwürfelungscode SC2. Als erster Verwürfelungscode SC1 kommt insbesondere der bei UMTS-FDD als Primary Scrambling Code bezeichnete Code und als zweiter Verwürfelungscode SC2 der Secondary Scrambling Code in Betracht.

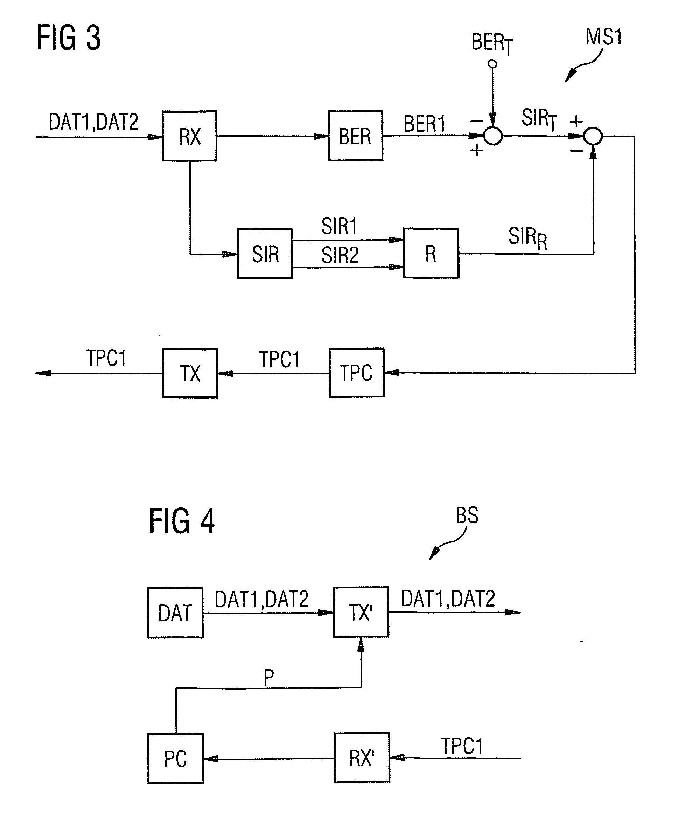

Figur 3 zeigt den Aufbau der ersten Mobilstation MS1 aus Figur 1. Anhand von Figur 3 wird die Funktion des gemeinsamen Regelkreises für die Qualität der Datenübertragung des ersten Kanals CH1 und des zweiten Kanals CH2 der ersten Verbindung V1 erklärt. Dieser Regelkreis dient zur Einstellung der Sendeleistungen der Basisstation BS für beide Kanäle CH1, CH2 auf einen gemeinsamen Wert. Eine Empfangseinheit RX der ersten Mobilstation MS1 empfängt die Daten DAT1, DAT2 der Kanäle CH1, CH2. Eine Einrichtung BER ermittelt für den ersten Kanal CH1 eine Bitfehlerrate BER1 und vergleicht diese mit einem Sollwert BER_{T}. Als Ergebnis dieses Soll- / Istvergleiches wird ein Sollwert SIR_{T} für das Signal-zu-Rauschverhältnis an der ersten Mobilstation MS1 ermittelt.

Eine Einrichtung SIR ermittelt aus den Empfangssignalen das Signal-zu-Rausch-Verhältnis SIR1, SIR2 sowohl für den ersten Kanal CH1 als auch für den zweiten Kanal CH2.

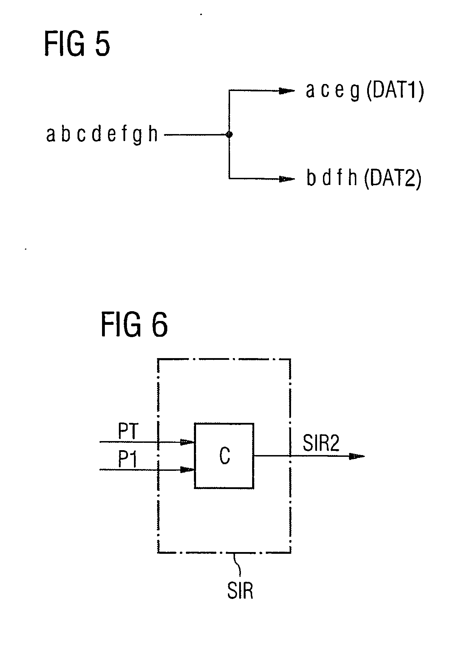

Figur 6 zeigt, dass die Einrichtung SIR eine Einheit C aufweist, die zur näherungsweisen Berechnung des Signal-zu-Rausch-Verhältnisses SIR2 des zweiten Kanals CH2 die Empfangsleistung P1 auf dem ersten Kanal CH1 durch die Gesamtempfahgsleistung PT an der ersten Mobilstation MS1 dividiert. Da auf beiden Kanälen CH1, CH2 von der Basisstation BS mit derselben Sendeleistung P gesendet wird, ist die Empfangsleistung (Nutzleistung) auf beiden Kanälen an der Mobilstation MS1 etwa gleich. Außerdem ist die Gesamtempfangsleistung PT an der Mobilstation MS1 näherungsweise identisch mit den Interferenzen für den zweiten Kanal, da nur wenige Kanäle den zweiten Verwürfelungscode SC2 nutzen, die meisten Kanäle jedoch den ersten Verwürfelungscode SC1. Für letztere gilt bezüglich des zweiten Kanals CH2 ein Orthogonalitätsfaktor von 1, ebenso wie für Kanäle in benachbarten Funkzellen.

Bei anderen Ausführungsformen der Erfindung kann das Signal-zu-Rausch-Verhältnis SIR2 des zweiten Kanals CH2 ebenso wie dasjenige SIR1 des ersten Kanals CH1 auf dem Fachmann bekannte Weise ermittelt werden.

Die beiden ermittelten Werte des Signal-zu-Rausch-Verhältnisses SIR1, SIR2, die ein Maß für die Qualität der Datenübertragung darstellen, werden einer Einrichtung R zugeführt, die aus beiden einen resultierenden Wert SIR_{R} berechnet, beispielsweise durch Bildung des arithmetischen Mittels. Dieser resultierende Wert SIR_{R} wird anschließend durch eine entsprechende Vergleichseinheit mit dem Sollwert SIR_{T} für das Signal-zu-Rauschverhältnis verglichen.

Eine Einrichtung TPC erzeugt diesem Vergleichsergebnis entsprechende Steuerkommandos TPC1 für die Einstellung der Sendeleistung des ersten Kanals CH1 und der Sendeleistung des zweiten Kanals CH2. Diese Steuerkommandos TPC1 werden von einer Sendeeinrichtung TX der ersten Mobilstation MS1 zur Basisstation BS übertragen.

Alternativ zu Figur 3 kann auch zusätzlich oder alternativ zur Ermittlung des resultierenden Signal-zu-Rausch-Verhältnisses SIR_{R} ein entsprechender resultierender Wert aus anderen Qualitätsparametern der Datenübertragung gebildet werden. Beispielsweise kann auch ein resultierender Wert der Bitfehlerraten BER1, BER2 beider Kanäle CH1, CH2 gebildet werden und mit dem Sollwert BER_{T} verglichen werden.

In einer alternativen Ausführungsform kann auch zunächst für jeden der beiden Kanäle CH1, CH2 ein Vergleich des jeweiligen Qualitätsparameters (beispielsweise des Signal-zu-Rauschverhältnisses oder der Bitfehlerrate) durchgeführt werden und anschließend für jeden Kanal ein Vergleich dieses Istwertes des Qualitätsparameters mit einem entsprechenden Sollwert erfolgen. In einem weiteren Schritt können dann die Vergleichsergebnisse beider Kanäle (beispielsweise durch Ermittlung des arithmetischen Mittelwertes) miteinander zu einem resultierenden Wert zusammengefasst werden, der anschließend zur Einstellung der Sendeleistungen der beiden Kanäle auf einen gemeinsamen Wert verwendet wird. Auch in diesem Fall ist die gemeinsame Sendeleistung der beiden Kanäle abhängig von den Werten eines Qualitätsparameters beider Kanäle.

Figur 4 zeigt den Aufbau der Basisstation BS aus Figur 1. Wie auch bei der Mobilstation MS1 in Figur 3 sind in Figur 4 für die Basisstation BS nur die für die Erfindung wesentlichen Komponenten dargestellt. Eine Einrichtung DAT, die u.a. die bezüglich Figur 2 bereits erläuterte und die anhand von Figur 5 weiter unten noch zu erläuternde sendeseitige Vorverarbeitung durchführt, führt die für die Übertragung vorgesehenen Daten DAT1, DAT2 der beiden Kanäle CH1, CH2 der ersten Verbindung V1 einer Sendeeinrichtung TX' zu, die diese über die Luftschnittstelle zur Mobilstation MS1 überträgt. Das Aussenden der Daten DAT1, DAT2 erfolgt dabei mit einer gemeinsamen Sendeleistung P, die von einer Einheit PC zur Einstellung der Sendeleistungen der beiden Kanäle CH1, CH2 der Sendeeinheit TX' mitgeteilt wird. Eine Empfangseinheit RX' empfängt die Steuerkommandos TPC1 von der Mobilstation MS1 und leitet diese an die Leistungseinstellungseinheit PC weiter. Die Leistungseinstellungseinheit PC verändert die Sendeleistung P des ersten Kanals CH1 und des zweiten Kanals CH2 entsprechend den Steuerkommandos TPC1. Die Steuerkommandos TPC1 signalisieren der Basisstation BS, entweder die Sendeleistung P zu erhöhen oder zu erniedrigen.

Figur 5 zeigt weitere Verarbeitungsschritte, die von der Einheit DAT in Figur 4 durchgeführt werden. Dargestellt ist das Prinzip der Verschachtelung (Interleaving) der zu übertragenden Daten a bis h der ersten Verbindung V1 zwischen den beiden Kanälen CH1, CH2. Die Daten werden auf beide Kanäle gemultiplext, so dass die über den ersten Kanal CH1 zu übertragenden Daten DAT1 die Daten a, c, e, g und die über den zweiten Kanal CH2 zu übertragenden Daten DAT2 die Daten b, d, f, h sind. Bei anderen Ausführungsbeispielen kann die Verschachtelung auch auf andere Weise erfolgen, insbesondere indem auch die Reihenfolge der Daten auf den beiden Kanälen geändert wird. Wichtig ist nur, dass aufeinander folgende Daten der Verbindung durch die Verschachtelung auf den beiden Kanälen nicht mehr hintereinander übertragen werden, sondern auf die Kanäle verteilt werden.

## Patentansprüche

1. Verfahren zum Einstellen der Sendeleistungen zweier Kanäle (CH1, CH2) einer ersten Verbindung (V1), bei dem
- gleichzeitig Daten der ersten Verbindung (V1) über beide Kanäle (CH1, CH2) übertragen werden
- und die Sendeleistungen der beiden Kanäle (CH1, CH2) auf einen gemeinsamen Wert (P) eingestellt werden, der abhängig vom Wert eines Qualitätsparameters (SIR1) der Datenübertragung des ersten Kanals (CH1) und vom Wert eines Qualitätsparameters (SIR2) der Datenübertragung des zweiten Kanals (CH2) ist.

2. Verfahren nach Anspruch 1, bei dem
die Werte der Qualitätsparameter (SIR1, SIR2) für den ersten Kanal (CH1) und für den zweiten Kanal (CH2) unterschiedlich sind.

3. Verfahren nach Anspruch 1 oder 2, bei dem
- für jeden der beiden Kanäle (CH1, CH2) der Wert des Qualitätsparameters (SIR1, SIR2) der Datenübertragung bestimmt wird,
- aus dem ermittelten Wert des Qualitätsparameters (SIR1) des ersten Kanals und dem ermittelten Wert des Qualitätsparameters (SIR2) des zweiten Kanals ein resultierender Wert (SIRR) berechnet wird,
- der resultierende Wert (SIRR) mit einem Sollwert (SIRT) verglichen wird
- und die Sendeleistungen der beiden Kanäle (CH1, CH2) in Abhängigkeit von dem Soll-/Istvergleich eingestellt werden.

4. Verfahren nach einem der vorstehenden Ansprüche, bei dem der Qualitätsparameter (SIR1, SIR2) der Datenübertragung des ersten Kanals (CH1) und des zweiten Kanals (CH2) ein Signal-zu-Rausch-Verhältnis ist.

5. Verfahren nach einem der vorstehenden Ansprüche, bei dem die Daten der ersten Verbindung (V1) vor dem Übertragen in der Weise zwischen den beiden Kanälen (CH1, CH2) verschachtelt werden, dass vor dem Verschachteln aufeinander folgende Daten der ersten Verbindung nach dem Verschachteln unterschiedlichen Kanälen zugeordnet sind.

6. Verfahren nach einem der vorstehenden Ansprüche, bei dem
- Daten (DAT1) vor ihrer Übertragung über den ersten Kanal (CH1) mit einem ersten Verwürfelungscode (SC1) verwürfelt werden
- und Daten (DAT2) vor ihrer Übertragung über den zweiten Kanal (CH2) mit einem zweiten Verwürfelungscode (SC2) verwürfelt werden.

7. Verfahren nach Anspruch 6, bei dem
- zusätzlich zu der ersten Verbindung (V1) gleichzeitig weitere Verbindungen (V2, V3) mit jeweils mindestens einem Kanal (CH3, CH4) betrieben werden, wobei die entsprechenden Daten vor ihrer Übertragung mit je einem Verwürfelungscode (SC1) verwürfelt werden,
- die zu übertragenden Daten der ersten Verbindung (V1) und der weiteren Verbindungen (V2, V3) vor ihrer Verwürfelung mit Spreizcodes (SP1, SP2, SP3) gespreizt werden, wobei Kanäle, die denselben Verwürfelungscode (SC1, SC2) verwenden, unterschiedliche Spreizcodes verwenden,
- und mehr Kanäle (CH3, CH4) der weiteren Verbindungen (V2, V3) unter Nutzung des ersten Verwürfelungscodes (SC1) als unter Nutzung des zweiten Verwürfelungscodes (SC2) betrieben werden.

8. Verfahren nach Anspruch 7, bei dem
das Signal-zu-Rausch-Verhältnis des zweiten Kanals (CH2) an einem Empfänger (MS1) der Daten der Verbindung (V1) näherungsweise als Verhältnis aus der Empfangsleistung (P1) auf dem ersten Kanal (CH1) und der Gesamtempfangsleistung (PT) berechnet wird.

9. Verfahren nach einem der vorstehenden Ansprüche, bei dem die Daten der ersten Verbindung (V1) über eine Luftschnittstelle übertragen werden.

10. Verfahren nach Anspruch 9, bei dem
die Daten der ersten Verbindung (V1) von einer Basisstation (BS) eines Mobilfunksystems zu einer Teilnehmerstation (MS1) übermittelt werden.

11. Kommunikationssystem
- mit Mitteln (TX') zum gleichzeitigen Übertragen von Daten einer Verbindung (V1) über wenigstens zwei Kanäle (CH1, CH2),
- und mit Mitteln (PC) zum Einstellen der Sendeleistungen der beiden Kanäle (CH1, CH2) auf einen gemeinsamen Wert (P), der vom Wert eines Qualitätsparameters (SIR1) der Datenübertragung des ersten Kanals (CH1) und vom Wert eines Qualitätsparameters (SIR2) der Datenübertragung des zweiten Kanals (CH2) abhängt.

12. Kommunikationssystem nach Anspruch 11
- mit Mitteln (SIR) zum Bestimmen des Wertes des Qualitätsparameters (SIR1, SIR2) der Datenübertragung für jeden der beiden Kanäle (CH1, CH2),
- mit Mitteln (R) zum Berechnen eines resultierenden Wertes (SIRR) aus dem ermittelten Wert des Qualitätsparameters (SIR1) des ersten Kanals (CH1) und dem ermittelten Wert des Qualitätsparameters (SIR2) des zweiten Kanals (CH2),
- mit Mitteln zum Vergleich des resultierenden Wertes (SIRR) mit einem Sollwert (SIRT)
- und mit Mitteln (PC) zum Einstellen der Sendeleistungen der beiden Kanäle (CH1, CH2) in Abhängigkeit von dem Soll-/Istvergleich.

## Claims

1. Method for adjusting the transmission outputs of two channels (CH1, CH2) of a first link (V1), whereby
- data of the first link (V1) is simultaneously transmitted over the two channels (CH1, CH2)
- and the transmission outputs of the two channels (CH1, CH2) are adjusted to a common value (P) which is dependent upon the value of a quality parameter (SIR1) of the data transmission of the first channel (CH1) and upon the value of a quality parameter (SIR2) of the data transmission of the second channel (CH2).

2. Method according to claim 1, in which
the values of the quality parameters (SIR1, SIR2) are different for the first channel (CH1) and for the second channel (CH2).

3. Method according to claim 1 or 2, in which
- the value of the quality parameter (SIR1, SIR2) of the data transmission is determined for each of the two channels (CH1, CH2),
- a resulting value (SIRR) is calculated from the determined value of the quality parameter (SIR1) of the first channel and the ascertained value of the quality parameter (SIR2) of the second channel,
- the resulting value (SIRR) is compared with a target value (SIRT)
- and the transmission outputs of the two channels (CH1, CH2) are adjusted depending on the comparison of target and actual values.

4. Method according to one of the preceding claims, in which the quality parameter (SIR1, SIR2) of the data transmission of the first channel (CH1) and of the second channel (CH2) is a signal-to-noise ratio.

5. Method according to one of the preceding claims, in which the data of the first link (V1) is interleaved between the two channels (CH1, CH2) prior to transmission in such a manner that data items of the first link which are consecutive before interleaving takes place are assigned to different channels after interleaving.

6. Method according to one of the preceding claims, in which
- data (DAT1) is scrambled by using a first scrambling code (SC1) prior to its transmission over the first channel (CH1)
- and data (DAT2) is scrambled by using a second scrambling code (SC2) prior to its transmission over the second channel (CH2).

7. Method according to claim 6, in which
- in addition to the first link (V1), further links (V2, V3) each having at least one channel (CH3, CH4) are operated simultaneously, whereby the corresponding data is scrambled prior to transmission using a scrambling code (SC1) in each case,
- the data of the first link (V1) to be transmitted and of the further links (V2, V3) is spread using spreading codes (SP1, SP2, SP3) prior to being scrambled, whereby channels which use the same scrambling code (SC1, SC2) use different spreading codes,
- and more channels (CH3, CH4) of the further links (V2, V3) are operated whilst using the first scrambling code (SC1) than whilst using the second scrambling code (SC2).

8. Method according to claim 7, in which
the signal-to-noise ratio of the second channel (CH2) is calculated at a receiver (MS1) of the data of the link (V1) approximately as the ratio from the receive power (P1) on the first channel (CH1) and the overall receive power (PT).

9. Method according to one of the preceding claims, in which the data of the first link (V1) is transmitted by way of an air interface.

10. Method according to claim 9, in which
the data of the first link (V1) is transmitted from a base station (BS) of a mobile radio system to a subscriber station (MS1).

11. Communication system
- with means (TX') for simultaneously transmitting data of a link (V1) over at least two channels (CH1, CH2),
- and with means (PC) for adjusting the transmission outputs of the two channels (CH1, CH2) to a common value (P) which is dependent upon the value of a quality parameter (SIR1) of the data transmission of the first channel (CH1) and upon the value of a quality parameter (SIR2) of the data transmission of the second channel (CH2).

12. Communication system according to claim 11,
- with means (SIR) for determining the value of the quality parameter (SIR1, SIR2) of the data transmission for each of the two channels (CH1, CH2),
- with means (R) for calculating a resulting value (SIRR) from the determined value of the quality parameter (SIR1) of the first channel (CH1) and the determined value of the quality parameter (SIR2) of the second channel (CH2),
- with means for comparing the resulting value (SIRR) with a target value (SIRT)
- and with means (PC) for adjusting the transmission outputs of the two channels (CH1, CH2) depending on the comparison of target and actual values.

## Revendications

1. Procédé de réglage des puissances d'émission de deux canaux (CH1, CH2) d'une première liaison (V1), selon lequel :
- des données de la première liaison (V1) sont transmises simultanément sur les deux canaux (CH1, CH2) et
- les puissances d'émission des deux canaux (CH1, CH2) sont réglées sur une valeur commune (P) qui dépend de la valeur d'un paramètre de qualité (SIR1) de la transmission de données du premier canal (CH1) et de la valeur d'un paramètre de qualité (SIR2) de la transmission de données du deuxième canal (CH2).

2. Procédé selon la revendication 1, selon lequel les valeurs des paramètres de qualité (SIR1, SIR2) du premier canal (CH1) et du deuxième canal (CH2) sont différentes.

3. Procédé selon la revendication 1 ou 2, selon lequel :
- la valeur du paramètre de qualité (SIR1, SIR2) de la transmission de données est déterminée pour chacun des deux canaux (CH1, CH2) ;
- une valeur résultante (SIRR) est calculée à partir de la valeur déterminée du paramètre de qualité (SIR1) du premier canal et de la valeur déterminée du paramètre de qualité (SIR2) du deuxième canal;
- la valeur résultante (SIRR) est comparée avec une valeur de consigne (SIRT) et
- les puissances d'émission des deux canaux (CH1, CH2) sont réglées en fonction de la comparaison consigne/réel.

4. Procédé selon l'une des revendications précédentes, selon lequel le paramètre de qualité (SIR1, SIR2) de la transmission de données du premier canal (CH1) et du deuxième canal (CH2) est un rapport signal-bruit.

5. Procédé selon l'une des revendications précédentes, selon lequel les données de la première liaison (V1) sont, avant la transmission, entrelacées entre les deux canaux (CH1, CH2) de manière telle que des données de la première liaison qui se succèdent avant l'entrelacement sont affectées à des canaux différents après l'entrelacement.

6. Procédé selon l'une des revendications précédentes, selon lequel
- des données (DAT1) sont embrouillées avant leur transmission sur le premier canal (CH1) au moyen d'un premier code d'embrouillage (SC1) et
- des données (DAT2) sont embrouillées avant leur transmission sur le deuxième canal (CH2) au moyen d'un deuxième code d'embrouillage (SC2).

7. Procédé selon la revendication 6, selon lequel
- sont exploitées, en plus de la première liaison (V1) et en même temps, d'autres liaisons (V2, V3) avec respectivement au moins un canal (CH3, CH4), les données correspondantes étant embrouillées avant leur transmission au moyen de respectivement un code d'embrouillage (SC1) ;
- les données à transmettre de la première liaison (V1) et des autres liaisons (V2, V3) sont étalées au moyen de codes d'étalement (SP1, SP2, SP3) avant leur embrouillage, des canaux qui utilisent le même code d'embrouillage (SC1, SC2) utilisant des codes d'étalement différents ; et
- plus de canaux (CH3, CH4) des autres liaisons (V2, V3) étant opérés en utilisant le premier code d'embrouillage (SC1), qu'en utilisant le deuxième code d'embrouillage (SC2).

8. Procédé selon la revendication 7, selon lequel le rapport signal-bruit du deuxième canal (CH2) est calculé au niveau d'un récepteur (MS1) des données de la liaison (V1) approximativement comme rapport résultant de la puissance de réception (P1) sur le premier canal (CH1) et de la puissance de réception totale (PT).

9. Procédé selon l'une des revendications précédentes, selon lequel les données de la première liaison (V1) sont transmises via une interface aérienne.

10. Procédé selon la revendication 9, selon lequel les données de la première liaison (V1) sont transmises d'une station de base (BS) d'un système radio mobile vers une station d'abonné (MS1).

11. Système de communication comportant :
- des moyens (TX') pour transmettre simultanément des données d'une liaison (V1) sur au moins deux canaux (CH1, CH2) et
- des moyens (PC) pour régler les puissances d'émission des deux canaux (CH1, CH2) sur une valeur commune (P) qui dépend de la valeur d'un paramètre de qualité (SIR1) de la transmission de données du premier canal (CH1) et de la valeur d'un paramètre de qualité (SIR2) de la transmission de données du deuxième canal (CH2).

12. Système de communication selon la revendication 11, comportant :
- des moyens (SIR) pour déterminer la valeur du paramètre de qualité (SIR1, SIR2) de la transmission de données pour chacun des deux canaux (CH1, CH2) ;
- des moyens (R) pour calculer une valeur résultante (SIRR) à partir de la valeur déterminée du paramètre de qualité (SIR1) du premier canal (CH1) et de la valeur déterminée du paramètre de qualité (SIR2) du deuxième canal (CH2) ;
- des moyens pour comparer la valeur résultante (SIRR) avec une valeur de consigne (SIRT) et
- des moyens (PC) pour régler les puissances d'émission des deux canaux (CH1, CH2) en fonction de la comparaison consigne/réel.
